# FASCICULE DE BREVET EUROPEEN

(11) **EP 1 792 769 B1**
(45) Date de publication et mention de la délivrance du brevet: **10.09.2014**
(21) Numéro de dépôt: 06291835.4
(22) Date de dépôt: 29.11.2006
(51) Int. Cl.: B60L 5/22

(54) **Pantographe de machine de traction ferroviaire et capteur pour le contrôle de la qualité de captage du courant par le pantographe**
Stromabnehmer für Eisenbahnfahrzeug und Aufnehmer zur Kontrolle der Stromaufnahmequalität des Stromabnehmers
Pantograph for railway traction vehicle and recorder for controlling the current capture quality of the pantograph

(30) Priorité: 01.12.2005 FR 0512194
(43) Date de publication de la demande: 06.06.2007
(73) Titulaire: Société Nationale des Chemins de Fer Français, 75014 Paris (FR)
(72) Inventeur: Servolle, Nicolas, 91600 Savigny Sur Orge (FR); Guegan, Alexis, 14150 Ouistreham (FR)
(74) Mandataire: Bringer, Mathieu

(56) Documents cités:
- FR-A- 2 846 415
- JP-A- 2001 018 692
- JP-A- 2002 328 063
- PATENT ABSTRACTS OF JAPAN vol. 2003, no. 03, 5 mai 2003 (2003-05-05) & JP 2002 328063 A (EAST JAPAN RAILWAY CO; RAILWAY TECHNICAL RES INST; TOYO ELECTRIC MFG C), 15 novembre 2002 (2002-11-15)
- PATENT ABSTRACTS OF JAPAN vol. 2000, no. 16, 8 mai 2001 (2001-05-08) & JP 2001 018692 A (RAILWAY TECHNICAL RES INST), 23 janvier 2001 (2001-01-23)

## Description

L'invention concerne les contrôles de qualité du captage, par un pantographe de machine de traction ferroviaire, du courant électrique circulant sur une caténaire.

Un pantographe est un appareil installé sur le toit d'une motrice électrique pour transmettre le courant électrique à ses organes moteurs. Il est composé généralement d'un cadre, articulé autour de pivots pour se déployer ou se replier, et d'une tête supportant un archet à une ou deux bandes de frottement, par d'autres pivots ou des suspensions appelées suspensions d'archet.

Quand, sous l'action conjuguée de vérins pneumatiques et de ressorts amortisseurs, le cadre articulé est déployé, la tête s'élève contre la caténaire et y est maintenue avec une force de contact, par exemple environ soixante dix Newtons. La motrice avançant, l'archet glisse contre la caténaire et reste en contact avec elle.

Mais aux grandes vitesses, la force de contact, relativement faible, est insuffisante pour empêcher des ruptures de contact entre les bandes de frottement et la caténaire, ce qui provoque des arcs électriques et des fluctuations de l'intensité du courant transmis aux moteurs. De ces fluctuations dépend la qualité du captage du courant électrique. Par ailleurs, une force de contact pantographe -caténaire trop forte peut conduire à des soulèvements trop importants du fil de contact avec risque de détérioration de la caténaire et des supports.

Il existe de nombreuses méthodes pour contrôler la qualité du captage du courant.

On peut bien sûr mesurer directement les fluctuations de l'intensité du courant.

On peut alternativement procéder à la mesure de la fréquence des arcs électriques intervenant lors des ruptures de contact ou effectuer des mesures de la puissance dissipée par ces mêmes arcs électriques.

Mais on peut aussi mesurer en temps réel la force de contact instantanée avec laquelle l'archet reste appliqué contre la caténaire.

FR 2 846 415 décrit un pantographe selon le préambule de la revendication 1 et 3.

L'invention concerne plus particulièrement un capteur permettant d'utiliser cette dernière méthode, de contrôle de la qualité du captage du courant, par la mesure de la force de contact.

Pouvant servir d'outil d'homologation lors de la réception de certains capteurs de type européen, notamment à fibres optiques à réseau de Bragg, le capteur de force de la présente demande doit répondre aussi à des spécifications bien précises touchant notamment ses performances. Ces spécifications sont détaillées dans la norme européenne NF EN 50317.

Le capteur comporte des jauges de contrainte solidaires d'une pièce d'épreuve, laquelle est insérée dans la chaîne mécanique support du pantographe et est située à proximité de l'archet, de façon à ce que les mesures ne soient pas affectées par la partie de la chaîne séparant la pièce d'épreuve de l'archet, par exemple par la présence de ressorts amortisseurs, notamment ceux pouvant être prévus dans les suspensions d'archet.

A proximité de la caténaire, le capteur est soumis aux effets électromagnétiques induits par les forts courants qui y circulent et par l'apparition d'arcs électriques. Aussi est-il prémuni contre ces effets par des filtrages électriques et des isolements galvaniques prévus sur les circuits électriques de mesure.

Surtout, son montage, nécessairement aérien, implique naturellement de respecter un profil aérodynamique de la pièce d'épreuve. Notamment, sa présence sur le pantographe ne doit pas induire de modification de la force de contact supérieure à 5 % de sa valeur nominale, ceci jusqu'à des vitesses pouvant atteindre 350 km/heure.

On connaît des pantographes de machine de traction ferroviaire pour le captage du courant sur une caténaire, comprenant un cadre, un archet de frottement sur la caténaire, au moins un support d'archet, une chape fixée au cadre et à laquelle est fixé le support d'archet et au moins un capteur de force.

Généralement, la chape est montée sur une boîte de suspension à ressort fixée à une traverse elle-même fixée à la fourche supérieure du cadre et le support d'archet est inséré entre les deux joues de la chape avec un pivot de solidarisation de la chape et du support traversant celui-ci et fixé aux deux joues de la chape, le capteur étant fixé par exemple sous les bandes de frottement de l'archet.

La demanderesse a cherché à perfectionner un tel pantographe et à offrir un capteur le moins perturbateur possible et ne prenant en compte que les efforts verticaux.

Ainsi, l'invention de la présente demande concerne tout d'abord un pantographe de machine de traction ferroviaire pour le captage du courant sur une caténaire, comprenant un archet de frottement sur la caténaire, au moins un support d'archet, une chape fixée à des moyens de suspension et à laquelle est fixé le support d'archet et au moins un capteur de mesure de la force de contact de l'archet sur la caténaire, caractérisé par le fait que la chape constitue le capteur.

Ainsi, le capteur n'est pas seulement le plus près possible de la chape puisqu'il se confond avec elle. Le capteur du pantographe de l'invention est le moins perturbateur qu'on puisse imaginer.

Avantageusement, la chape comportant deux joues, les deux joues de la chape comportent, chacune, une poutre d'épreuve dans laquelle est chassé un pivot de solidarisation de la chape et du support d'archet.

L'invention concerne également un capteur pour le contrôle de la qualité du captage du courant sur une caténaire par un pantographe de machine de traction ferroviaire, caractérisé par le fait qu'il comporte une chape de fixation d'un support d'archet de pantographe.

De préférence, chaque joue de la chape de fixation comporte une poutre d'épreuve et des moyens pour limiter sa flexion, avantageusement une jambe de butée.

De préférence encore, les poutres d'épreuve de la chape sont affaiblies pour en augmenter la sensibilité, avantageusement par des évidements de réception de jauges extensomètres.

De préférence toujours, la chape comporte un logement de réception d'un accéléromètre.

L'invention sera mieux comprise à l'aide de la description suivante du pantographe et du capteur de force de l'invention, en référence au dessin annexé, sur lequel :
- la figure 1 est une vue perspective de l'archet du pantographe et de son support, avec les chapes de fixation ;
- la figure 2 est une vue perspective d'une des chapes du pantographe de la figure 1 ;
- la figure 3 représente une vue en perspective éclatée des joues de la chape de la figure 2, avec leurs poutres d'épreuve, équipées chacune de jauges extensomètres et
- la figure 4 est un schéma du câblage électrique préféré des jauges extensomètres.

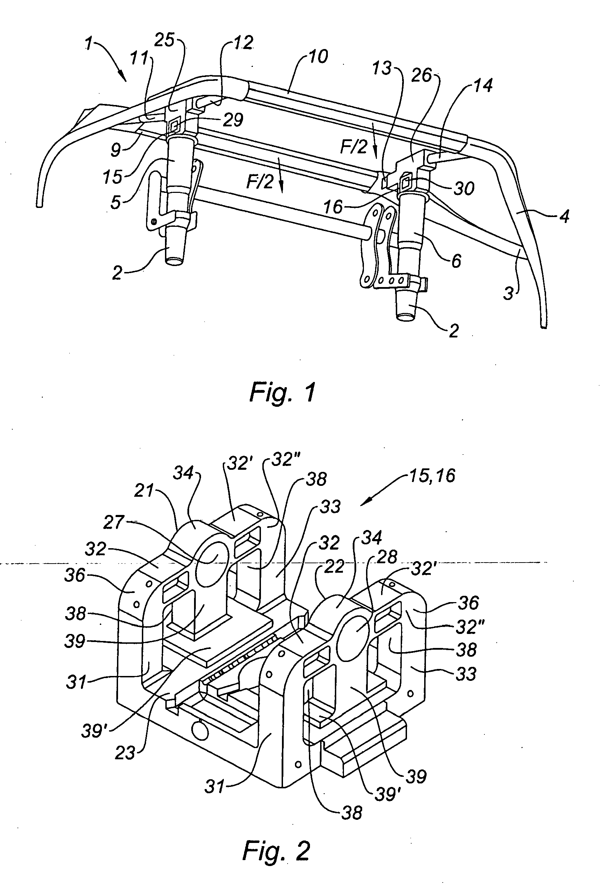

En référence à la figure 1, un pantographe 1, dont on n'a représenté que la tête, comporte, en partie supérieure de son cadre 2, des organes de suspension 5, 6, ici amortisseurs et, en l'espèce, des boîtes à ressort (spring boxes), pour maintenir un archet à deux demi-archets 3, 4 contre un fil de caténaire (non représenté) de distribution de courant électrique, les demi-archets étant recouverts chacun de leur bande de frottement 9, 10.

Quand la motrice se déplace, un mécanisme commande le déploiement du cadre articulé 2 du pantographe 1 de sorte que les bandes de frottement 9 et 10 des demi-archets 3 et 4 sont appliquées contre le fil de contact avec une force F.

Les deux demi-archets 3, 4 sont maintenus solidaires et parallèles entre eux par deux paires de bras 11, 12 et 13, 14 qui leur sont approximativement perpendiculaires.

Chaque bras 11, 12, 13, 14 est solidaire, par l'une de ses deux extrémités, de l'une des deux extrémités de l'un des deux demi-archets 3, 4. Les autres extrémités des bras 11, 12, 13, 14 sont solidaires de l'un des deux supports d'archet centraux 25 et 26.

Les boîtes de suspension 5 et 6 sont solidaires chacune, en leur partie supérieure, d'une chape 15, 16 de fixation et les supports d'archet 25 et 26 y sont engagés de façon à assurer le support des demi-archets 3 et 4, comme il va être précisé ci-après, en référence à la figure 2.

Chaque chape 15, 16, sur la figure 2, comporte deux joues 21 et 22 parallèles assises sur une semelle 23 de fixation aux boîtes de suspension correspondantes 5, 6. Chaque joue 21, 22 comporte un alésage 27, 28 et chaque support 25, 26, qui est agencé pour s'encastrer entre les deux joues 21, 22 lui faisant face, est équipé d'un pivot 29, 30 de solidarisation agencé pour y être inséré en même temps que dans les alésages 27 et 28 et y pivoter, mais le support 25, 26 ne peut, lui, pivoter par rapport à la chape 15, 16 que selon un angle à débattement suffisant pour que les deux bandes de frottement 9 et 10 puissent, sous l'action de la force F, rester en contact avec le fil de la caténaire quelle que soit l'inclinaison du fil. Les alésages 27 et 28 sont suffisamment éloignés de la semelle 23 de façon à ce que les faces inférieures des supports 25 et 26 ne viennent pas, en pivotant, buter sur la semelle 23.

Les chapes 15 et 16 sont agencées pour mesurer conjointement la force F en permanence et servent donc de capteurs de force en même temps que de supports des demi-archets 3 et 4.

Les deux joues 21 et 22 sont constituées chacune d'un arceau monobloc 36 s'appuyant sur la semelle 23 par deux pieds 31 et 33 joints entre eux en leur extrémité supérieure par une poutre 32 de section générale rectangulaire, comportant des faces horizontales 32' et verticales 32", et une partie centrale 34 dans laquelle est percé l'alésage 27, 28. Les deux joues 21 et 22 sont identiques.

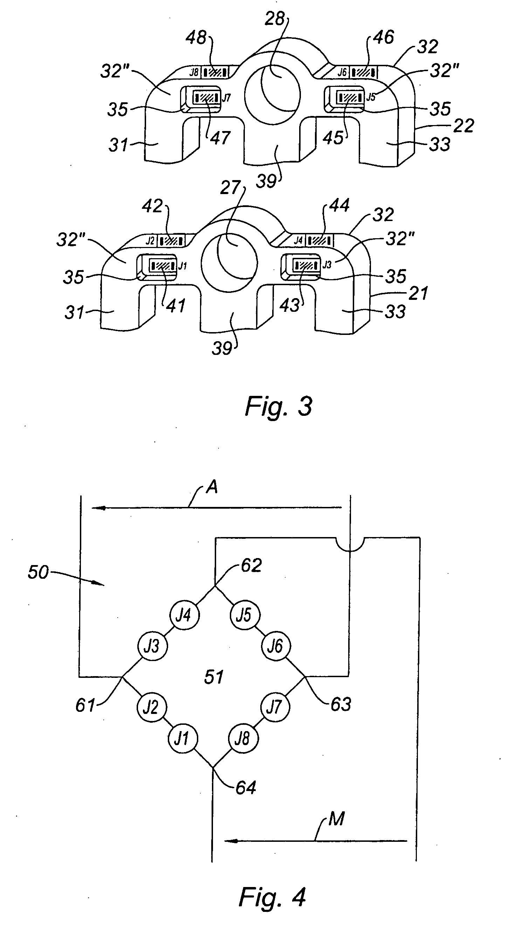

Les poutres 32 des joues 21 et 22, en référence à la figure 3, sont agencées pour servir de pièces d'épreuve subissant des déformations entraînant des déplacements détectables par des senseurs de déplacement, ici des jauges extensomètres.

Les poutres 32 sont, chacune, équipées de quatre jauges extensomètres 41, 42, 43, 44 sur la poutre 32 de la joue 21, et 45, 46, 47, 48 sur la poutre 32 de la joue 22.

La section des poutres 32 est affaiblie par des alésages 38 suffisants pour obtenir une bonne sensibilité des jauges, comme sait le faire l'homme du métier.

Comme les poutres 32 supportent le poids des archets 3, 4 et sont en permanence sous une contrainte résultant de l'existence de la force F, et qu'elles ne doivent pas ni se déformer plastiquement, ce qui fausserait les mesures, ni à fortiori rompre, elles sont pourvues d'une jambe de butée 39, verticale, solidaire de la poutre 32 sous la partie centrale 34 et prolongée par un butoir 39' parallèle à la semelle 23 et séparé d'elle d'une distance correspondant à la déformation élastique maximale utile de la poutre 32.

Ainsi toute déformation rémanente des poutres 32 est exclue.

Dans l'exemple de la figure 3, les jauges 41, 42, 43, 44, 45, 46, 47, 48 sont logées au fond d'évidements 35 ménagés dans les faces verticales 32" des poutres 32, de sorte qu'elles travaillent en cisaillement. Dans ces évidements 35, elles sont protégées des chocs accidentels qui pourraient survenir lors de la manipulation des chapes 15, 16.

On aurait pu disposer les jauges sur une face horizontale de leur évidement 35 et ainsi les faire travailler en flexion.

On aurait pu encore ménager ces évidements 35 dans les faces horizontales 32' et, faisant travailler les jauges en flexion, utiliser les mesures des déformations des poutres 32 selon la direction de la force F.

Ces deux dernières options sont d'ailleurs obligatoires si, à la place des jauges extensomètres, on préfère utiliser des accéléromètres. Un accéléromètre par poutre situé dans un logement ménagé en partie centrale 34 peut alors suffire.

Il faut noter que les évidements 35 contribuent à l'affaiblissement de la poutre 32 en même temps que les alésages 38 évoqués ci-dessus.

Sous la contrainte de la force F, les jauges extensomètres 41, 42, 43, 44 sur la poutre 32 de la joue 21, et 45, 46, 47, 48 sur la poutre 32 de la joue 22 mesurent les déformations (ou les déplacements) des poutres 32 des deux joues 21, 22, et ces déformations créent dans les jauges des courants électriques sensiblement proportionnels à la force F, mais de signes soit égaux, soit opposés, qui doivent être ajoutés ou retranchés suivant la position des jauges sur les poutres 32 et leur câblage électrique.

Si les jauges sont positionnées comme indiqué sur la figure 3, les paires 41, 42 et 43, 44 d'une des joues respectivement en face des paires 47, 48 et 45, 46 de l'autre des joues, il est préférable de choisir leur câblage électrique comme indiqué sur le schéma de circuit électrique de la figure 4.

Ce schéma électrique est celui, classique, d'un pont de Wheatstone 50 comportant une maille 51 à quatre noeuds 61, 62, 63, 64, les noeuds 61 et 63 étant reliés à l'alimentation A, et les noeuds 62 et 64 fournissant une grandeur électrique M de mesure sensiblement proportionnelle à la force F.

Les deux premières jauges 41, 42 d'une même joue 21 et d'un même côté par rapport à la partie centrale 34 de cette joue sont mises en série sur une même branche 64-61 de la maille 51 et les deux autres jauges 43, 44 de cette même joue 21 étant mises en série l'une avec l'autre mais en opposition avec les deux premières 41, 42 sur la branche suivante 61-62.

Les quatre jauges 41, 42, 43, 44 relient les deux bornes 62, 64 fournissant la mesure M. Mais leurs signaux résultant de la force F, mis en opposition comme ci-dessus, étant de signes contraires, s'ajoutent.

De même, les jauges 45 et 46 sont mises en série sur la branche suivante 62-63 et les jauges 47 et 48 sont mises en série sur la branche 63-64, mais en opposition avec les deux précédentes, puisque sur la maille 51 la somme des signaux électriques doit être nulle.

On obtient ainsi une mesure M optimale éliminant les forces horizontales parasites qui pourraient apparaître.

On notera enfin que les chapes étant les capteurs de force, la résistance aérodynamique reste absolument inchangée, qu'il y ait des capteurs de force ou non.

## Revendications

1. Pantographe (1) de machine de traction ferroviaire pour le captage du courant sur une caténaire, comprenant un archet (3, 4) de frottement sur la caténaire, au moins un support d'archet (25, 26), une chape (15, 16) fixée à des moyens de suspension (2 ; 5, 6) et à laquelle est fixé le support d'archet (25, 26) et au moins un capteur de mesure de la force de contact de l'archet (3, 4) sur la caténaire, **caractérisé par le fait que** la chape (15, 16) constitue le capteur.

2. Pantographe selon la revendication 1, dans lequel, la chape (15, 16) comportant deux joues (21, 22), les deux joues (21, 22) de la chape (15, 16) comportent, chacune, une poutre d'épreuve (32) dans laquelle est chassé un pivot (29, 30) de solidarisation de la chape (15, 16) et du support d'archet (25, 26).

3. Capteur pour le contrôle de la qualité du captage du courant sur une caténaire par un pantographe (1) de machine de traction ferroviaire, **caractérisé par le fait qu'**il comporte une chape (15, 16) de fixation d'un support d'archet (25, 26) de pantographe.

4. Capteur selon la revendication 3, dans lequel, la chape (15, 16) comportant deux joues (21, 22), chaque joue (21, 22) de la chape de fixation (15, 16) comporte une poutre d'épreuve (32) et des moyens pour limiter sa flexion (39, 39').

5. Capteur selon la revendication 3, dans lequel les moyens de limitation de la flexion comprennent une jambe de butée (39).

6. Capteur selon l'une des revendications 4 et 5, dans lequel les poutres d'épreuve (32) de la chape (15, 16) sont affaiblies (38) pour en augmenter la sensibilité.

7. Capteur selon la revendication 6, dans lequel les poutres d'épreuve sont affaiblies par des évidements (35) de réception de jauges extensomètres (41, 42, 43, 44, 45, 46, 47, 48).

8. Capteur selon l'une des revendications 3 à 6, dans lequel la chape (15, 16) comporte un logement de réception d'un accéléromètre.

## Patentansprüche

1. Stromabnehmer (1) einer Eisenbahnzugmaschine zum Abgreifen des Stroms an einer Fahrleitung, umfassend eine Schleifwippe (3, 4) an der Fahrleitung, wenigstens einen Wippenträger (25, 26), ein Gabelgelenk (15, 16), das an Aufhängungsmitteln (2; 5, 6) befestigt ist und an dem der Wippenträger (25, 26) befestigt ist, und wenigstens einen Sensor zum Messen der Kontaktkraft der Wippe (3, 4) an der Fahrleitung, **dadurch gekennzeichnet, dass** das Gabelgelenk (15, 16) den Sensor bildet.

2. Stromabnehmer nach Anspruch 1, bei dem das Gabelgelenk (15, 16) zwei Wangen (21, 22) umfasst, wobei die zwei Wangen (21, 22) des Gabelgelenks (15, 16) jeweils einen Prüfbalken (32) umfassen, in dem ein Verbindungszapfen (29, 30) für das Gabelgelenk (15, 16) und den Wippenträger (25, 26) steckt.

3. Sensor zum Regeln der Qualität des Abgriffs des Stroms an einer Fahrleitung durch einen Stromabnehmer (1) einer Eisenbahnzugmaschine, **dadurch gekennzeichnet, dass** er ein Gabelgelenk (15, 16) zum Befestigen eines Stromabnehmerwippenträgers (25, 26) umfasst.

4. Sensor nach Anspruch 3, bei dem das Gabelgelenk (15, 16) zwei Wangen (21, 22) aufweist, wobei jede Wange (21, 22) des Befestigungsgabelgelenks (15, 16) einen Prüfbalken (32) und Mittel zum Begrenzen seiner Biegung (39, 39') umfasst.

5. Sensor nach Anspruch 3, bei dem die Mittel zum Begrenzen der Biegung eine Anschlagstrebe (39) aufweisen.

6. Sensor nach einem der Ansprüche 4 und 5, bei dem die Prüfbalken (32) des Gabelgelenks (15, 16) zum Erhöhen der Empfindlichkeit abgeschwächt (38) sind.

7. Sensor nach Anspruch 6, bei dem die Prüfbalken durch Aussparungen (35) zur Aufnahme von Dehnungsmessstreifen (41, 42, 43, 44, 45, 46, 47, 48) geschwächt sind.

8. Sensor nach einem der Ansprüche 3 bis 6, bei dem das Gabelgelenk (15, 16) eine Aufnahme für einen Beschleunigungsmesser umfasst.

## Claims

1. Pantograph (1) for a railway traction engine for capturing current on a catenary, comprising a bow (3, 4) for frictional contact with the catenary, at least one bow support (25, 26), a cover (15, 16) fixed to suspension means (2; 5, 6) and to which is fixed the bow support (25, 26) and at least one sensor for measuring the strength of contact of the bow (3, 4) with the catenary, **characterised in that** the cover (15, 16) constitutes the sensor.

2. Pantograph according to claim 1, wherein the cover (15, 16) comprises two cheeks (21, 22) and the two cheeks (21, 22) of the cover (15, 16) each comprise a test beam (32) into which is driven an attachment pin (29, 30) for attaching the cover (15, 16) and the bow support (25, 26).

3. Sensor for monitoring the quality of current capture on a catenary by a pantograph (1) for a railway traction engine, **characterised in that** it comprises a cover (15, 16) for attachment of a pantograph bow support (25, 26).

4. Sensor according to claim 3, wherein the cover (15, 16) comprises two cheeks (21, 22) and each cheek (21, 22) of the attachment cover (15, 16) comprises a test beam (32) and means for limiting its bending (39, 39').

5. Sensor according to claim 3, wherein the means for limiting bending comprise an abutment leg (39).

6. Sensor according to one of claims 4 and 5, wherein the test beams (32) of the cover (15, 16) are weakened (38) to increase their sensitivity.

7. Sensor according to claim 6, wherein the test beams are weakened by recesses (35) for accommodating extensometer gauges (41, 42, 43, 44, 45, 46, 47, 48).

8. Sensor according to one of claims 3 to 6, wherein the cover (15, 16) comprises a housing for accommodating an accelerometer.
